(19) Europäisches Patentamt

European Patent Office

Office européen des brevets

(11) **EP 1 560 678 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
*B23Q 41/02* *(2006.01)*      *B23Q 41/04* *(2006.01)*
*B23Q 41/06* *(2006.01)*      *B65G 1/02* *(2006.01)*
*B65G 47/74* *(2006.01)*      *B23Q 7/14* *(2006.01)*

(21) Anmeldenummer: 03775354.8

(22) Anmeldetag: **14.11.2003**

(86) Internationale Anmeldenummer:
**PCT/EP2003/012741**

(87) Internationale Veröffentlichungsnummer:
**WO 2004/045804 (03.06.2004 Gazette 2004/23)**

(54) **FLEXIBLE FERTIGUNGSLINIE MIT MEHREREN ENTKOPPLUNGSMODULEN ZUM BEARBEITEN VON AUF PALETTEN ABGELEGTEN WERKSTÜCKEN**

FLEXIBLE PRODUCTION LINE COMPRISING A PLURALITY OF DECOUPLING MODULES FOR MACHINING WORKPIECES ARRANGED ON PALLETS

LIGNE DE FABRICATION SOUPLE COMPORTANT PLUSIEURS MODULES DE DESACCOUPLEMENT POUR L'USINAGE DE PIECES DISPOSEES SUR DES PALETTES

(84) Benannte Vertragsstaaten:
**DE ES FR GB IT**

(30) Priorität: **15.11.2002 DE 10253224**

(43) Veröffentlichungstag der Anmeldung:
**10.08.2005 Patentblatt 2005/32**

(73) Patentinhaber: **Niles Simmons Industrieanlagen GmbH**
**09117 Chemitz (DE)**

(72) Erfinder:
• **NAUMANN, Hans**
**Albany, NY (US)**

• **HECKENDORF, Jürgen**
**34587 Felsberg (DE)**
• **SEYB, Holger**
**37073 Göttingen (DE)**
• **HABERKORN, Rainer**
**09117 Chemnitz (DE)**

(74) Vertreter: **Grättinger & Partner (GbR)**
**Wittelsbacherstrasse 5**
**82319 Starnberg (DE)**

(56) Entgegenhaltungen:
DE-A- 19 948 139          GB-A- 2 301 338
US-A1- 2002 148 704

EP 1 560 678 B1

**Beschreibung**

Die Erfindung betrifft eine flexible Fertigungslinie zum Bearbeiten von auf Paletten abgelegten Werkstücken in Bearbeitungsoperationen.

Ein vergleichbares Fertigungssystem ist beispielsweise aus der DE 199 48 139 A1 bekannt. Das bekannte Fertigungssystem ist derart beschaffen, dass es möglichst einfach durch Erweiterung oder Verringerung der Fertigungskapazität an den Bedarf anpassbar ist und eine möglichst flexible Aufstellung von einzelnen Werkzeugmaschinen ermöglicht. Dazu sind unterschiedliche Werkzeugmaschinenarten mehrfach redundant vorgesehen und jeder Werkzeugmaschine ist ein Werkstückspeicher vorgelagert. Die Steuerung eines zugehörigen Transportsystems bestimmt den Füllstand der einzelnen Werkstückspeicher und lenkt in Abhängigkeit des Füllstandes die zu bearbeitenden Werkstücke in den Werkstückspeicher einer bestimmten Maschine. Demnach ist vor jeder Werkzeugmaschine ein Werkstückspeicher angeordnet, der zugleich als Werkstückpuffer dient. Die Betonung bei dem bekannten Fertigungssystem liegt auf der Anpassbarkeit an den jeweiligen mengenmäßigen Bedarf. Da die Maschinen mehrfach redundant vorgesehen sind, kann einerseits durch die Kapazität der Einzelmaschinen und andererseits durch die Anzahl der Maschinen gleichen Typs der Produktionsausstoß beeinflusst werden. So ist es möglich, dass während der Großserienfertigung eines industriellen Massenprodukts, beispielsweise eines Kraftfahrzeuges, ein Fertigungssystem zur Fertigung eines speziellen Bauteils eingesetzt wird, das drei oder vier Maschinenarten gleichen Typs erfordert. Bei nachlassendem Bedarf kann das bekannte Fertigungssystem schnell und einfach angepasst werden, in dem von den einzelnen Maschinenarten jeweils eine oder mehrere Maschinen abgeschaltet werden (vgl. DE 199 48 139 A1, Spalte 2, Zeilen 1 bis 45).

Aus der DE 198 49 374 A1 ist ein Produktionssystem bekannt. Das Produktionssystem hat eine gesteigerte Produktivität bei der Fertigung von Werkstücken, indem eine Staubildung vor einer ausgefallenen Maschine vermieden wird. Dazu besteht die Fertigungslinie aus Rollenbändern, von denen jeweils Übergabetische zu einzelnen Bearbeitungsmaschinen abzweigen. Es verlaufen jeweils zwei Rollenbänder parallel zueinander und parallel zur Hauptfertigungslinie. Zwischen der Hauptfertigungslinie und den Rollenbändern sind Verschiebetische vorgesehen. Jeweils ein Abschnitt der Hauptfertigungslinie, der Rollenbänder mit einem Verschiebetisch, einem Übergabetisch und einer Bearbeitungsmaschine ist zu einem Modul zusammengefasst. Die einzelnen Module greifen ineinander über. Das bekannte Produktionssystem ist so ausgelegt, dass eine Staubildung von Werkstücken vermieden wird. Die sich aufstauenden Werkstücke werden in eine Warteschleife befördert, die sich wenigstens über die Länge eines, bei Bedarf auch über mehrere Module erstrecken kann.

Aus der EP 1 125 684 A2 ist ein verkettetes Fertigungssystem bekannt. Zur Verbesserung von bekannten Fertigungssystemen soll durch eine möglichst flexible Steuerung des Teiledurchlaufs auch durch ein großes System mit vielen Bearbeitungseinrichtungen, sowohl bei einem One-piece-flow als auch bei einem Durchlauf unter Verwendung von Puffern, eine erhöhte Produktivität erreicht werden. Dazu sind mindestens drei Puffer vorgesehen, die zur Aufnahme von Teileträgern ausgebildet sind und jeweils mindestens zwei Stapelplätze aufweisen. Zwischen den Stapelplätzen ist eine Umsetzeinrichtung vorgesehen, um Teileträger innerhalb der Puffer zwischen den Teileträgern umsetzen zu können. Die Puffer sind in der Form von Automationszellen ausgestaltet, die von außerhalb einer Fertigungslinie beschickt werden können. Innerhalb der Automationszellen können Werkstückträger gestapelt, versetzt und gedreht werden, ohne dass dazu von außen eingegriffen werden muss. Umstapel- und Handhabungsvorgänge innerhalb des Arbeitsraums der Automationszellen sind von einem Ein- bzw. Ausschleusen von Werkstückträgern in einen Laderaum entkoppelt. Somit kann die notwendige Unfallsicherheit gewahrt werden. Das bekannte Fertigungssystem verbindet die Vorteile einer Linienfertigung mit den Vorteilen von Automationszellen, die eine flexible Puffergröße und eine flexible Zufuhr von Werkstückträgerstapeln ermöglichen.

Aus der DE 101 12 169 A1 ist ein verkettetes Fertigungssystem zur Durchführung von Bearbeitungsoperationen an Teilen bekannt. Das Fertigungssystem soll einen schnellen Transport von Teilen zu den jeweiligen Bearbeitungsstationen erlauben und eine möglichst hohe Verfügbarkeit und Ausfallsicherheit bei kurzen Durchlaufzeiten durch das Gesamtsystem gewährleisten. Das Fertigungssystem hat mindestens eine erste und mindestens eine zweite Bearbeitungsstation. Ein erstes Portal, dass sich in Richtung der Fertigungslinie erstreckt, koppelt die beiden Bearbeitungsstationen miteinander. Ein zweites Portal erstreckt sich quer zur Richtung der Fertigungslinie und koppelt eine Mehrzahl von ersten oder zweiten Bearbeitungsstationen miteinander, wobei jedem zweiten Portal eine Speicherablage zur Aufnahme von Teilen zugeordnet ist. Die Betonung liegt hier auf der Zuordnung einer Speicherablage zu jedem zweiten Portal, wodurch für das System eine Vielzahl von Einzelspeichern erforderlich werden, deren Koordination das bekannte Fertigungssystem entsprechend träge macht. Nach einer vorteilhaften Weiterbildung ist eine Mehrzahl von ersten und zweiten Portalen vorgesehen, die sich jeweils an Kreuzungspunkten miteinander kreuzen, wobei jedem Kreuzungspunkt eine eigene Speicherablage zugeordnet ist. Damit wird eine zusätzliche Redundanz in das Fertigungssystem eingeführt, da ein sowohl in Richtung des Hauptteileflusses als auch in Querrichtung dazu verkettetes Gesamtsystem erreicht wird, das als netzartige Struktur ausgebildet ist, welches an den Netzwerkknotenpunkten Speicherablagen besitzt und somit eine äußerst hohe Flexibilität erreichen soll. Insgesamt entsteht auf diese Weise ein netzartiges System durch das sichergestellt ist, dass Verzögerungen, die durch Ausfall einzelner Bearbeitungsstationen oder durch Staus auf einzelnen Portalen auftreten, jeweils durch einen anderen Weg umgangen werden können (vgl. DE 101 12 169 A1 Spalte 6, Zeile 68 bis Spalte 7, Zeile 4). Eine Koordination der Netzwerkknotenpunkte in Richtung einer Hauptfertigungslinie ist nicht vorgesehen, vielmehr arbeiten die Speicher zugleich in mehreren Richtungen.

Aus der DE 195 31 522 A1, korrespondierend zur GB 2 301 338 A, ist eine Vorrichtung zum Handhaben palettierbarer Werkstücke bekannt mit einer Speichereinrichtung zur Aufnahme der palettierten Werkstücke. Die bekannte Vorrichtung ist dazu eingerichtet, die Werkstücke im Kreis zu fördern und weist eine festgelegte Beschickungsstation zum Ein- und Ausleiten der Werkstücke sowie zwei festgelegte, räumlich von der Beschickungsstation getrennte Umladestationen auf. Sie hat eine Handhabungseinrichtung, mittels derer die Werkstücke bei den Umladestationen aus der Speichereinrichtung entnehmbar und in diese einsetzbar sind und die zur Zuführung der Werkstücke zu der Maschine und zum Ausleiten aus der Maschine eingerichtet ist (Anspruch 1). Die bekannte Vorrichtung ist Teil einer Fertigungsinsel (production island) und ist in ihrem Aufbau vergleichbar mit der aus der EP 1 125 684 A2 bekannten Einrichtung (vgl. dort insbes. die Figuren 2, 4 und 5). Die aus der DE 195 31 522 A bekannte Einrichtung ist dazu vorgesehen, Fertigungsinseln, die aus mehreren gleichartigen oder ungleichartigen Maschinen und zugehörigen Einrichtungen bestehen können, von einem zentralen Punkt (Beschickungsstation 17) her mit Werkstücken zu versorgen und nach der Bearbeitung auch wieder davon zu entsorgen. Die bekannte Einrichtung ist nicht zur zentralen Ver- und Entsorgung einer Mehrzahl von Fertigungsinseln vorgesehen, die innerhalb einer Fertigungslinie miteinander verkettet sind oder sonst wie miteinander im Zusammenhang stehen. Auch würde eine Kombination der aus der DE 195 31 522 bekannten Einrichtung mit der aus der DE 101 12 169 A1 bekannten Einrichtung oder zusätzlich mit der aus der DE 199 48 139 A1 bekannten Einrichtung noch immer nicht zu einer flexiblen Fertigungslinie führen, wie sie Gegenstand der vorliegenden Erfindung ist.

Nach dem vorstehend gewürdigten Stand der Technik wurden die Maschinen einer Fertigungslinie bisher direkt verkettet.

Demgegenüber besteht die Aufgabe der vorliegenden Erfindung darin, die Fertigungslinie zu vereinfachen und übersichtlicher zu gestalten sowie die Fertigung von Serien von an sich gleichartigen, aber im einzelnen voneinander unterschiedlichen Werkstücken, beispielsweise wellenartigen Werkstücken, wie Kurbelwellen, Nockenwellen, Schaltwellen oder Getriebewellen, von Serie zu Serie problemlos umrüsten zu können. Dabei soll zugleich ein kontinuierlicher Durchlauf der Werkstücke durch die Fertigungslinie garantiert sein, ohne dass die Umrüstung einzelner Maschinen oder die Veränderung von einzelnen Operationen den Stillstand der gesamten Fertigungslinie voraussetzt. Schließlich soll eine hohe Flexibilität erzielt und die benötigte Fertigungsfläche verringert werden.

Erfindungsgemäß wird die Aufgabe dadurch gelöst, dass

- die gesamte Fertigungslinie mehrere Entkopplungsmodule aufweist,
- jedes Entkopplungsmodul dazu vorgesehen ist, einzelne von in einer Mehrzahl auf adressierbaren Paletten abgelegten Werkstücken wenigstens einer von mehreren Bearbeitungsoperationen zuzuführen,
- einzelne Entkopplungsmodule sowohl in als auch entgegen der Richtung der Fertigungslinie miteinander verbunden sind,
- jedes Entkopplungsmodul einen Palettenspeicher hat, der
- mehrere vertikal etagenartig übereinander und horizontal in senkrechten Reihen nebeneinander
- angeordnete Fächer zur Aufnahme einzelner Paletten hat und seitlich neben einer senkrechten Reihe
- eine senkrechte Reihe aufweist mit
- einer Einrichtung zur Bereitstellung von Paletten außerhalb der äußeren Längsseite des Palettenspeichers, wobei das Entkopplungsmodul jeweils
- ein Regalbedienungsgerät hat, das entlang der inneren Längsseite des Palettenspeichers in horizontaler Richtung an
- Führungsschienen und zugleich in vertikaler Richtung bewegbar und dazu vorgesehen ist, Paletten zu jedem Fach oder zur senkrechten Reihe zu fördern, wobei
- einzelne Palettenspeicher im Verlauf der Fertigungslinie
- einen Längsabstand haben, über den sie durch ein Übergabeband oder
- einen seitlichen Abstand haben, über den sie durch ein Regalbedienungsgerät miteinander in Verbindung stehen sowie am
- Eingang der Fertigungslinie eine Aufgabe für Paletten mit zu bearbeitenden Werkstücken und am
- Ausgang eine Entnahme für Paletten mit bearbeiteten Werkstücken vorgesehen ist.

Erfindungsgemäß wird also eine gesamte Fertigungslinie in einzelne Teilabschnitte unterteilt. Diese Teilabschnitte, welche zugleich zur Handhabung, Förderung von Werkstückträgern, nämlich Paletten, und deren Speicherung vorgesehen sind, werden mit Entkopplungsmodul bezeichnet. Jedem Entkopplungsmodul sind mehrere Operationen, das heißt Bearbeitungsmaschinen, Mess- oder Waschplätze, usw. zugeordnet. Die Größe, insbesondere die Länge, der einzelnen Entkopplungsmodule sowie die Anzahl der ihnen jeweils zugeordneten Operationen wird durch die minimale Taktzeit- und Werkstückanforderungen bestimmt. Wesentlich in diesem Zusammenhang ist die Größe und Ausgestaltung des Speichers. Dessen Größe wird derart bestimmt, dass beim Umrüsten von einer Operation die nachfolgende Operation über einen Zeitraum, entsprechend der Dauer der Umrüstung, ohne Unterbrechung mit Werkstücken versorgt werden kann, welche zuvor in der Operation bearbeitet wurden, die gerade umgerüstet wird. Die Speicherbereiche der Entkopplungsmodule sind den Operationen frei zuordenbar. Das Entkopplungsmodul ist zugleich Störspeicher.

Es ist also im Falle von Störungen oder Unterbrechungen der Fertigung infolge Umrüstung nicht erforderlich, dass die gesamte Fertigungslinie leergefahren wird. Vielmehr ist das System in der Lage, auf solche Ereignisse flexibel zu reagieren, so dass die kalkulierten Durchlaufzeiten einzelner Serien bequem eingehalten werden können.

Operationen werden nacheinander umgerüstet, ohne dass der vor- und nachgeschaltete Prozess abgeschaltet werden muss.

Die bereits umgerüstete Operation mit einem neuen Werkstück arbeitet in den Speicher, die noch nicht umgerüstete Operation arbeitet aus dem Speicher.

Von der Umrüstung einer Fertigungslinie werden nicht immer alle Operationen oder Entkopplungsmodule gleichzeitig erfasst. Einzelne Operationen oder Entkopplungsmodule können ausgeschaltet oder zugeschaltet werden, andere Operationen oder Entkopplungsmodule werden unverändert übernommen. Da eine Umrüstaktion aber in der Regel immer bei der vordersten umzurüstenden Operation beginnt, ist vorgesehen, dass in der Folge von Operationen jeweils nach der ersten umzurüstenden Operation in einem Entkopplungsmodul immer genügend Speicherkapazität vorhanden ist. Jedes Entkopplungsmodul enthält einen Palettenspeicher mit einer ausreichenden Anzahl von Fächern für die Paletten. Die Anzahl s der Fächer beträgt:

$$ s = \sum_{n=1}^{N} \frac{t_n}{t_z \cdot M} + \text{Störspeicher} + \text{Arbeitsspeicher} $$

$t_n$ = Umrüstzeit der Operation n
$t_z$ = Taktzeit
M = Anzahl der Werkstücke pro Palette
N = Anzahl/Anbindungen der Portale pro EKM

Die Fächer sind alle gleichgroß und können von einem einzelnen Regalbedienungsgerät bedient werden. Eine Steuerung in Form eines Bordcomputers führt das Regalbedienungsgerät zu jeder Palette, deren Adresse im Fertigungsprogramm vorgegeben ist. Das Ablegen von Paletten innerhalb des Palettenspeichers ist willkürlich; d.h. beim Ablegen einer Palette wird jeweils das Fach angesteuert, welches gerade frei ist und zu welchem das Regalbedienungsgerät jeweils die kürzeste Entfernung hat. Die Wege des Regalbedienungsgeräts entlang des Palettenspeichers werden in der Steuerung gespeichert und stehen beim Abrufen einer Palette wieder zur Verfügung. Die Wege, die das Regalbedienungsgerät zurücklegt, werden von seiner Steuerung optimiert und dahinter verbirgt sich die besonders hohe Flexibilität des Systems. Auf diese Weise jedenfalls funktioniert die Steuerung, solange nur ein einzelnes Regalbedienungsgerät am Entkopplungsmodul im Einsatz ist.

Regelmäßig, und zwar aus Gründen der konstruktiven Vereinfachung und Einheitlichkeit haben alle Palettenspeicher einer Fertigungslinie den gleichen Aufbau. Je nachdem zu welchem Entkopplungsmodul der Palettenspeicher gehört, kann er mitunter mehr Fächer haben, als für die Bearbeitungsoperationen benötigt werden. Diese Überkapazität an Speicherplätzen stört aber nicht, denn das "intelligente" Regalbedienungsgerät wird stets nur so viele Fächer bedienen, wie die Bearbeitungsoperationen erfordern. überzählige Speicherkapazität kann gegebenenfalls einem der vorgeschalteten oder nachfolgenden Entkopplungsmodule zur Verfügung gestellt werden. Durch ein derartiges Shiften von Speicherkapazitäten können die Palettenspeicher entsprechend klein gehalten werden, was wiederum die Flexibilität des Systems erhöht.

Die Anzahl von Paletten, die in einem Palettenspeicher gelagert sind, wird bei vorgegebener Linientaktzeit von der Zeit bestimmt, die für die Umrüstung einzelner Operationen auf eine andere Serie vorgesehen ist. Unter der Linientaktzeit versteht man in diesem Zusammenhang die Fertigstellung einzelner Werkstücke beziehungsweise mehrerer auf einer Palette zusammengefasster gleichartiger Werkstücke pro Zeiteinheit.

Zweckmäßig ist es, zur Verringerung der benötigten Werkstattfläche zwei einzelne Entkopplungsmodule mit unterschiedlichen Operationen zu einem Mehrfach-Entkopplungsmodul zusammenzufassen, welches sodann von einem einzigen Regalbedienungsgerät für die Paletten bedient werden kann. Dabei kann es sich beispielsweise um die Zusammenfassung vom ersten und letzten Entkopplungsmodul einer Fertigungslinie handeln. Jedem dieser zum Mehrfach-Entkopplungsmodul zusammengefassten einzelnen Entkopplungsmodule sind völlig unterschiedliche Operationen zugeordnet. Eine derartige Zusammenfassung von Entkopplungsmodulen hat den Vorteil, dass auf diese Weise die Werkstattfläche verringert werden kann und mit Hilfe von einem einzelnen Regalbedienungsgerät zwei Entkopplungsmodule zugleich bedient werden können. Diese Art der Anordnung von Entkopplungsmodulen hat Ähnlichkeit mit einem Spiegelbild.

Zur Absicherung der Förderung sowie zur allfälligen Wartung sind zwei Regalbedienungsgeräte, von denen eines redundant ist, für jedes Entkopplungsmodul vorgesehen. Die beiden Regalbedienungsgeräte sind vorzugsweise am Anfang und/oder am Ende eines jeden Entkopplungsmoduls angeordnet. Bei Ausfall eines einzelnen Regalbedienungsgerätes kann das andere Regalbedienungsgerät die erforderlichen Palettenbewegungen innerhalb des Entkopplungsmoduls allein vornehmen.

Auf der dem Regalbedienungsgerät abgewandten äußeren Längsseite hat der Palettenspeicher für jedes Fach eine zusätzliche Ablage für Paletten, wo die Paletten in einer Bereitschaftsstellung gehalten werden können. Aus dieser Bereitschaftsstellung werden die Paletten von Übergabeschlitten entnommen, die sich quer zum Regalbedienungsgerät hin und her bewegen können. Die Übergabeschlitten entnehmen einzelne Paletten aus der Bereitschaftsstellung und führen sie zu den jeweiligen Bearbeitungsoperationen. Greifer an den Bearbeitungsoperationen entnehmen die zu bearbeitenden Werkstücke einzeln aus der Palette, führen sie der Bearbeitungsmaschine zu und legen die bearbeiteten Werkstücke hinterher wieder auf der Palette ab. Der Übergabeschlitten führt die Palette mit den bearbeiteten Werkstücken zur Bereitschaftsstellung am Palettenspeicher zurück. Von dort werden sie wieder in den Palettenspeicher hineingezogen und vom Regalbedienungsgerät in ein freies Fach des Palettenspeichers gebracht, um dort gespeichert zu werden.

Wie bereits erwähnt bestehen einzelne Operationen aus unterschiedlichen Arten von Werkzeugmaschinen, welche unterschiedliche Bearbeitungen an den Werkstücken vornehmen. Die Bearbeitungskapazität der einzelnen Werkzeugmaschinenarten kann unschwer durch Hintereinanderschaltung von einer Mehrzahl von gleichen Werkzeugmaschinen an den Bedarf angepasst werden. Neben gleichartigen können aber auch sich in der Fertigungsfolge ergänzende und/oder voneinander unterschiedliche Werkzeugmaschinen einem Entkopplungsmodul zugeordnet sein. Der Vorteil einer solchen Zuordnung besteht darin, dass Arbeitsabläufe innerhalb der Fertigungslinie problemlos geändert und unterschiedliche wellenartige Werkstücke gleichzeitig bearbeitet werden können.
Werkstücke können im Sinne der Prozessreihenfolge vorwärts und rückwärts vertaktet werden.

Der Palettenspeicher innerhalb eines einzelnen Entkopplungsmoduls hat einen regalförmigen Aufbau mit mehreren horizontal nebeneinander und etagenartig übereinander angeordneten Fächern, welche zugleich die Speicher bilden. Die Abmessungen von Entkopplungsmodulen werden im wesentlichen von den Fahrzeiten des Regalbedienungsgeräts bestimmt und betragen in der Regel zwischen zwanzig und fünfzig Metern in der Länge. Damit ist gewährleistet, dass für das gelegentliche Ausführen von manuellen Eingriffen an einzelnen Bearbeitungsoperationen durch eine Bedienungsperson nicht vorher lange Wege zurückgelegt werden müssen.

Die für die Verbindung einzelner Entkopplungsmodule vorgesehenen Elemente bestehen aus einfachen Band- oder Rollenförderern. Diese sind regelmäßig in einer solchen Höhe angeordnet, dass Bedienungspersonen mühelos darunter hindurch gehen können. Zugleich ist auch die obere der beiden Horizontalführungen, an denen das Regalbedienungsgerät geführt wird, in ausreichender Höhe über den Palettenspeicher hinaus verlängert. Damit kann das Regalbedienungsgerät bei Bedarf, beispielsweise für die Durchführung von Wartungen, aus dem Entkopplungsmodul herausgenommen und wieder eingesetzt werden.

Nachfolgend sind die besonderen Vorteile der erfindungsgemäßen Fertigungslinie noch einmal stichwortartig zusammengefasst:

- Bei der Fertigung von wellenförmigen Werkstücken wird die Umrüstung der gesamten Fertigungslinie von einem Typ auf einen anderen einmalig durch die längste auftretende Umrüstzeit bestimmt.
- Wellenförmige Werkstücke, insbesondere PKW-Kurbelwellen unterschiedlicher Bauformen für R3-R6 Motoren, V- bzw. W-Motoren und in unterschiedlichen Ausführungen, Guss oder Stahl, können auf derselben Fertigungslinie bearbeitet werden.
- Jede Kurbelwelle ist im Leitrechner ständig identifizierbar im Hinblick auf den Fertigungsstatus und den Qualitätsstatus.
- Die Reihenfolge der Bearbeitungsoperationen kann bedarfsweise geändert werden und ist nicht fest verkettet bzw. an eine vorgegebene Sequenz gebunden.
- Der Palettenspeicher innerhalb eines Entkopplungsmoduls ist nicht unmittelbar einer einzelnen Operation zugeordnet. Die Anordnung und Anzahl von innerhalb eines Palettenspeichers angelegten Speicherplätzen ist variabel. Daraus resultiert, dass bei Bedarf einer Arbeitsfolge ein wesentlich größerer Speicher zugeordnet werden kann, z. B. wenn eine Welle geänderte Taktzeitanforderungen benötigt.
- Die Taktzeitreserve einer jeden Arbeitsfolge wird genutzt, um Teile zu bevorraten.
- Vorrat wird genutzt, um Ausfälle durch Umrüstungsaufwand je Bearbeitungsoperation zu überbrücken.
- Das Entkopplungsmodul ist über einen Übergabeschlitten mit einer programmierbaren Maschinenbeladeeinrichtung (Portalroboter) kombiniert - Fertigungszellen-Anbindung.

- Die Umrüstdauer je Arbeitsfolge führt nur zu einem einmaligen Umrüstverlust.
- Transport- und Lagersystem sind identisch und deswegen ökonomisch, und
- die komplette Fertigungslinie bildet ein durchgängiges System, welches aus baugleichen Entkopplungsmodulen aufgebaut ist.

Nachfolgend wird die Erfindung an einem Ausführungsbeispiel näher beschrieben.

Es zeigen jeweils in verkleinerter und schematischer Darstellung die

- Fig. 1 den Ablauf einer Arbeitsfolge in einem Abschnitt eines Entkopplungsmoduls,
- Fig. 2 zwei aneinander angrenzende Entkopplungsmodule,
- Fig. 3 die Gesamtheit einer flexiblen Fertigungslinie in der Übersicht und
- Fig. 4 einen Palettenspeicher in perspektivischer Ansicht.

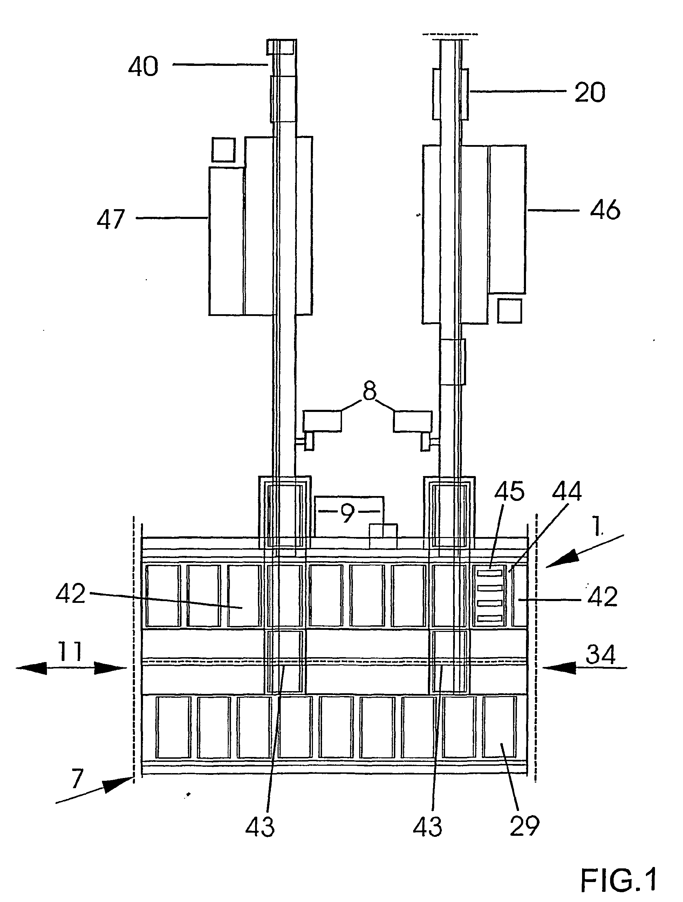

Die Fig. 1 zeigt einen Längenabschnitt aus einem Entkopplungsmodul 1 einer Fertigungslinie 34. Das Entkopplungsmodul 1 besteht aus einem Palettenspeicher 42, der sich in der Richtung 11 der Fertigungslinie 34 erstreckt und dem zwei Regalbedienungsgeräte 43 zugeordnet sind. Die Regalbediengeräte 43 sind Manipulatoren, welche zum Heben, Senken, Fördern, Ablage und Wiederaufnahme von einzelnen Paletten 44 innerhalb des Palettenspeichers 42 vorgesehen sind. Auf einer solchen Palette 44 sind beispielsweise mehrere Kurbelwellen 45 nebeneinander abgelegt. Mit Hilfe der Regalbedienungsgeräte 43 werden die Paletten 44 für die Bearbeitungsoperationen 46 und 47 bereitgestellt und nach der Bearbeitung wieder im Palettenspeicher 42 abgelegt. Bei den Operationen 46 und 47 kann es sich um Werkzeugmaschinen handeln, welche quer, beispielsweise unter einem rechten Winkel zur Richtung 11 des Palettenspeichers 42 angeordnet sind. Zwischen den Operationen 46 und 47 und dem Palettenspeicher 42 ist auch noch jeweils eine Einrichtung 8 zur statistischen Prozess-Datenerfassung vorgesehen. Zusätzlich kann noch ein Messplatz 9 vorgesehen sein, an welchem einzelne Kurbelwellen 45 von Hand oder automatisch vermessen werden.

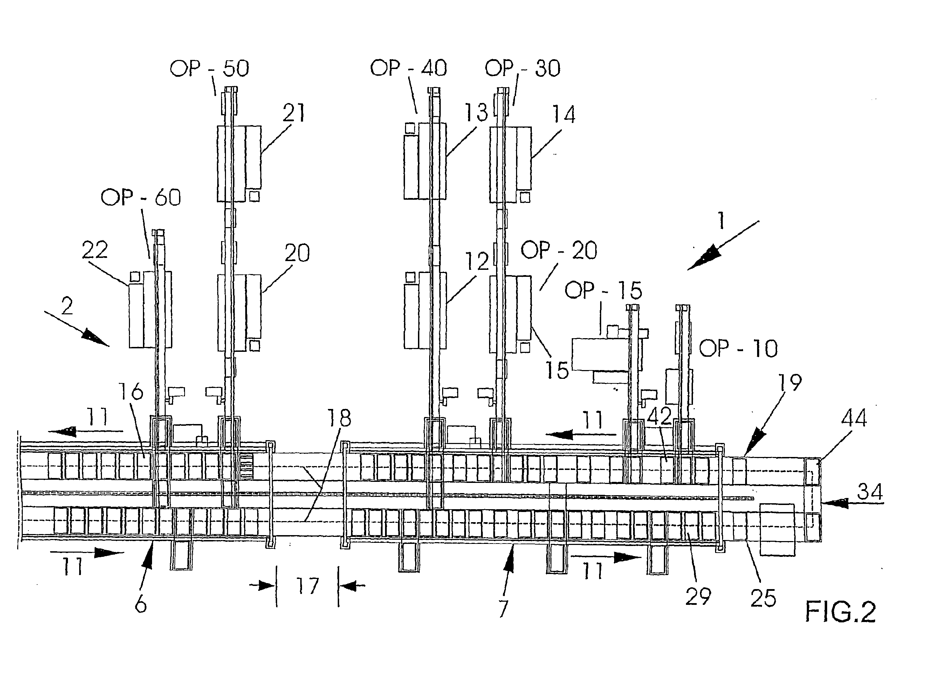

Einen erweiterten Ausschnitt aus der Fig. 1 zeigt die Fig. 2. aktueller Ablauf:

OP10 Teilekennzeichnung
OP15 Unwucht Messen Rohteil (optional)
OP20 Ablängen, geometrisch Zentrieren bzw.
OP30 Wuchtzentrieren nach Daten aus OP15 (optional) Drehen Flansch, Zapfen, Hauptlager 1,
OP40 Lünettensitz Vorfräsen Haupt- und Hublager
OP50 Drehräumen Hauptlager, Geberring
OP60 Fertigfräsen Hublager

Wiederum nach der Beschickung des Palettenspeichers 42 mit Paletten 44 werden die darauf abgelegten Kurbelwellen 45 zuerst der Operation OP-10 zugeführt. Dort erfolgt die Teilekennzeichnung. Im weiteren Verlauf 11 des Palettenspeichers 42 wird die Operation OP-15 erreicht, die zum Wuchtzentrieren der Kurbelwellen 45 vorgesehen ist. Danach folgen die Operationen OP-20 und OP-30, wobei in der Operation OP-20 das Ablängen, Zentrieren und Fräsen der Radialanschlagsfläche und in der Operation OP-30 das Drehen des ersten Hauptlagers, der Wange, des Flansches und des Zapfens einer Kurbelwelle 45 erfolgen. Weiter fortschreitend im Verlaufe 11 folgt die Operation OP-40, die überwiegend für das Fräsen der Hauptlager und Wangen vorgesehen ist. Wie in der Fig. 2 erkennbar, beinhaltet die Operation OP-40 beispielsweise zwei Fräsmaschinen 12 und 13, mit denen die vorgesehenen Abschnitte einer Kurbelwelle 45 gefräst werden. Die vorhergehende Operation OP-30 weist zwei Drehmaschinen 14 und 15 auf. Hinter der Operation OP-40 endet der erste Palettenspeicher 42 und mit ihm das erste Entkopplungsmodul 1 der Fertigungslinie 34. Der erste Palettenspeicher 42 findet seine Fortsetzung im Palettenspeicher 16, der sich in gleicher Richtung 11 unter Wahrung eines Abstandes 17 an den Palettenspeicher 42 anschließt.

Über den Abstand 17 sind die beiden Palettenspeicher 42 und 16 durch Übergabebänder 18 miteinander verbunden.

Demnach erstreckt sich das erste Entkopplungsmodul 1 von der Aufgabe 19 für die Paletten 44 bis zum Übergabeband 18 und weist den Palettenspeicher 42 auf. Zugeordnet sind die Operationen OP-10, OP-15, OP-20, OP-30 und OP-40 (Fig. 2).

Der sich im Palettenspeicher 16 des nachfolgenden Entkopplungsmoduls 2 fortsetzende Palettenspeicher 42 beginnt mit der Operation OP-50, welche von den Fräsmaschinen 20 und 21 besetzt ist, die dem Vor- und Fertigfräsen von Hublagern von Kurbelwellen 45 dienen. Daran schließt sich die Operation OP-60 an, wo die Hauptlager von Kurbelwellen 45 mit Hilfe einer Dreh-Drehräummaschine 22 bearbeitet werden.

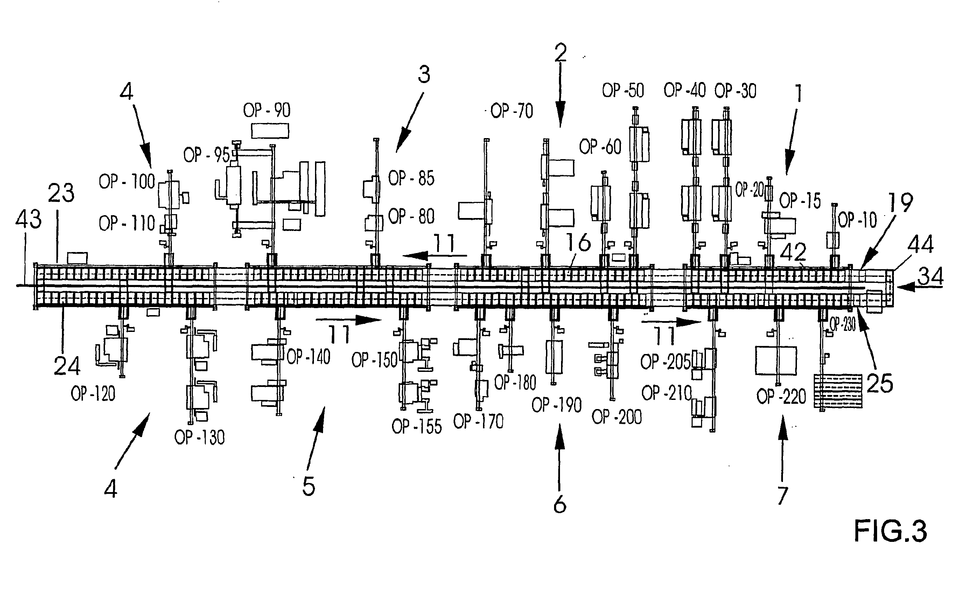

Die Fig. 3 bietet einen Gesamtüberblick über eine flexible Fertigungslinie 34 für Kurbelwellen 45. Die Fertigungslinie 34 besteht aus den einzelnen in der Fertigungsrichtung 11 aufeinander folgenden Entkopplungsmodulen 1, 2, 3, 4, 5, 6 und 7. Analog zum Beispiel der Fig. 1 und 2 sind den einzelnen Entkopplungsmodulen 3, 4, 5, 6 und 7 weitere Operationen zugeordnet, die der Vollständigkeit halber im einzelnen hier nach beispielhaft besonders aufgeführt werden:

| | |
|---|---|
| OP70 | Ölkanäle Bohren |
| OP80 | Entgraten |
| OP85 | Waschen |
| OP90 | Härten |
| OP95 | Anlassen |
| OP100 | Fest- und Richtwalzen |
| OP110 | Passlager Fertigbearbeiten und Walzen |
| OP120 | Hauptlager Schleifen |
| OP130 | Hublager Schleifen |
| OP140 | Flansch, Zapfen und Schlüsselfläche bearbeiten Geberrad Bohren und Gewinde |
| OP150 | Flansch schleifen |
| OP155 | Zapfen schleifen |
| OP160 | Waschen |
| OP170 | Rissprüfung |
| OP180 | Nadellager Fertigbearbeiten |
| OP190 | Montage Geberring |
| OP200 | Endwuchten |
| OP205 | Nachwuchten |
| OP210 | Superfinishen |
| OP220 | Endwaschen und Trocknen |
| OP230 | Endmessen, Protokollieren, Klassieren |

Das Gesamtbild der Fertigungslinie 34 für die Bearbeitung von Kurbelwellen 45, Nockenwellen oder Getriebewellen wird von den Werkzeugmaschinen 12 bis 15 und 20 bis 22 geprägt, welche den einzelnen Operationen OP-10 bis OP-230 zugeordnet sind. Folgende Werkzeugmaschinen sind hier überwiegend anzutreffen: Drehmaschinen, Räummaschinen, Drehräummaschinen, Dreh-Drehräummaschinen, Außen- oder Innenfräsmaschinen, Fräsmaschinen, gegebenenfalls Nutenfräsmaschinen, Kurbelwellen-Fest- und Richtwalzmaschinen sowie Schleifmaschinen. Gleichartige Werkzeugmaschinen 12 bis 15 und 20 bis 22 sind den einzelnen Operationen OP-10 bis OP-230 der Entkopplungsmodule 1 bis 7 entweder einzeln oder mehrfach hintereinander zugeordnet. Mehrere Werkzeugmaschinen sind regelmäßig dann vorhanden, wenn dies die Taktzeit der einzelnen Operationen OP-10 bis OP-230 erfordert. Von Operation zu Operation, OP-10 bis OP-230, sind die Werkzeugmaschinen 12 bis 15 und 20 bis 22 fortlaufend in der Fertigungsrichtung 11 miteinander verkettet, wie man das in der Fig. 3 erkennen kann.

Es brauchen auch nicht immer alle Operationen OP-10 bis OP-230 und damit die diesen Operationen zugeordneten Werkzeugmaschinen 12 bis 15 und 20 bis 22 gleichzeitig im Einsatz zu sein. Je nach zu bearbeitender Serie von gleichartigen Werkstücken, beispielsweise Kurbelwellen 45 für 3-, 4-, 5-, 6- und Mehrzylinder Reihenmotoren oder Kurbelwellen 45 für V-Motoren können einzelne Operationen OP-10 bis OP-230 einer Fertigungslinie 34 und somit auch die diesen Operationen OP-10 bis OP-230 jeweils zugeordneten Werkzeugmaschinen 12 bis 15 und 20 bis 22 zeitweise ab- oder zugeschaltet werden.

Beispielsweise sind einem ersten der Entkopplungsmodule 1, 2, 3, 4, 5 und 6 Drehmaschinen, Außenfräsmaschinen, Dreh-Drehräummaschinen und Verzahnungs- bzw. Nutenfräsmaschinen zugeordnet, dem in einem zweiten, nachfolgenden Entkopplungsmodul 2, 3, 4, 5, 6 und 7 Werkzeugmaschinen zum Festwalzen und Richten, Härten, Schleifen und Finishen von Kurbelwellen 45 zugeordnet sind. In der logischen Konsequenz dieses Konzepts kann eine ganze Fertigungslinie 34 gegebenenfalls bis auf zwei Entkopplungsmodule 1, 2, 3, 4, 5, 6 oder 7 reduziert sein.

Vorzugsweise sind die Werkzeugmaschinen in waagerechter Bauweise ausgestaltet zur Aufnahme von wellenförmigen Werkstücken unterschiedlicher Art sowie für Spannmittel und Werkzeuge.

Bemerkenswert an der Fig. 3 ist, dass das Entkopplungsmodul 4 annähernd nur die halbe Längserstreckung der übrigen Entkopplungsmodule 1, 2, 3, 5, 6 und 7 aufweist. Das Entkopplungsmodul 4 ist beispielsweise in der Mitte seines Palettenspeichers 23 aufgetrennt worden und setzt sich quasi spiegelbildlich im Palettenspeicher 24 fort, welcher parallel zum Palettenspeicher 23 in der Bildebene der Fig. 3 unterhalb des Regalbediengeräts 43 angeordnet ist. In dem selben Sinne sind die Entkopplungsmodule 3 und 5, 2 und 6 sowie 1 und 7 mit ihren jeweiligen Palettenspeichern 42, 16, 23 und 24 parallel zueinander und einem gemeinsamen Regalbediengerät 43 gegenüberliegend angeordnet. Folglich liegt auf der rechten Bildseite der Fig. 3 dem Eingang 19 der Fertigungslinie 34 der Ausgang 25 gegenüber, wo die fertig bearbeiteten Kurbelwellen 45 wieder aus der Fertigungslinie 34 austreten.

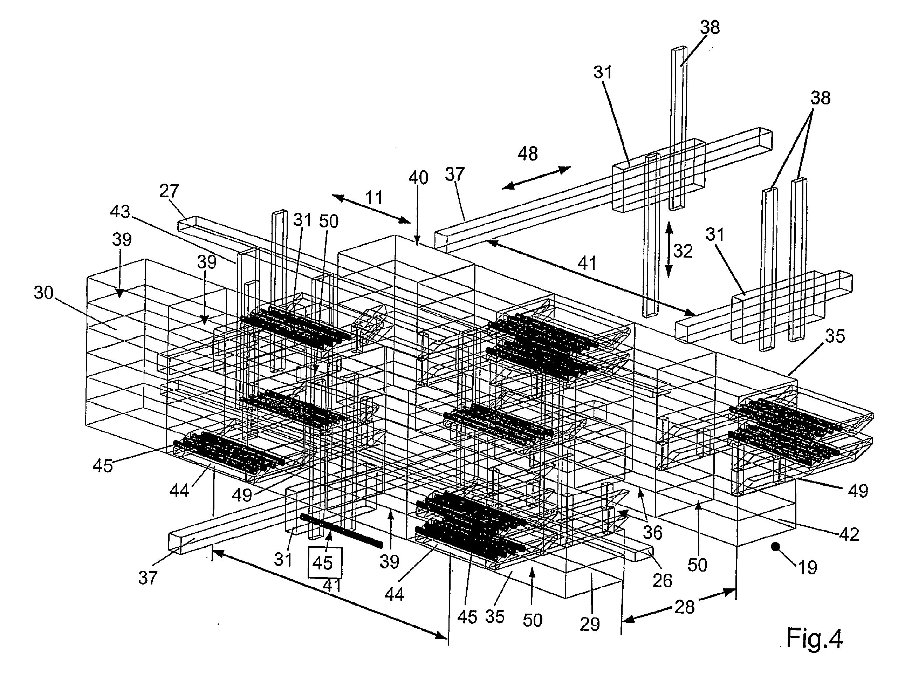

Wie in der Fig. 4 deutlicher erkennbar, wird ein Regalbediengerät 43 (nicht näher gezeigt) an zwei zueinander parallelen und im Abstand übereinanderliegenden Führungsschienen 26 und 27 und zwei parallel nebeneinander und im Abstand 28 zueinander angeordneten Palettenspeichern 42 und 29 entlang geführt. Die beiden Palettenspeicher 42 und 29 haben jeweils einen regalförmigen Aufbau mit mehreren, vertikal etagenartig übereinander und horizontal in Reihen 39, 40 nebeneinander angeordneten Fächern 30 von gleichen Abmessungen. Weiterhin sind in der Fig. 4 Paletten 44 erkennbar, auf denen Kurbelwellen 45 abgelegt sind. Die Regalbedienungsgeräte 43 nehmen einzelne Paletten 44 am Anfang 19 des Palettenspeichers 42 auf und legen sie in einzelnen Fächern 30 der Palettenspeicher 42 oder 29 ab. Darüber hinaus bringen sie die Paletten 44 auch noch zu einem der Übergabebänder 18 (Fig. 2) zwischen den Entkopplungsmodulen 1 und 2, 2 und 3 usw. und 6 und 7, um sie auch wieder am Ausgang 25 der Fertigungslinie 34 abzulegen.

Auf den äußeren Längsseiten 35 der Palettenspeicher 42 und 29, die den inneren Längsseiten 36 jeweils gegenüber liegen, befinden sich Einrichtungen 49 mit deren Hilfe Paletten 44 aus einzelnen Fächern 30 jeweils in eine Bereitschaftsstellung in einer senkrechten Reihe 50 gebracht werden können. Aus der Bereitschaftsstellung können die Paletten 44 von Übergabeschlitten 31 aufgenommen werden, welche in der Richtung 48 an Horizontalführungen 37 und in der Richtung 32 an Vertikalführungen 38 verfahrbar sind und jeweils einer bestimmten senkrechten Reihe 50 des Palettenspeichers 42 oder 29 zugeordnet sind. Aufgenommene Paletten 44 führen die Übergabeschlitten 31 über ihre Horizontalführungen 37 den betreffenden Bearbeitungsoperationen OP 10 bis OP 230 zu und bringen sie von dort auch wieder zu den Palettenspeichern 42 oder 29 zurück. Wie in der Fig. 4 erkennbar, haben zwei senkrechte Reihen 50 einen seitlichen Abstand 41 voneinander, welcher dem gegenseitigen Abstand der Horizontalführungen 37 und somit auch dem gegenseitigen Abstand von Operationen in der Längsrichtung 11 entspricht. Beim Übergabeschlitten 31 handelt es sich um eine an sich bekannte Einrichtung zur Längs- und Höhenförderung von Paletten 42. Erfindungsgemäß fördern die Regalbedienungsgeräte 43 Paletten 44 horizontal in der Fertigungsrichtung 11 und auch vertikal in der Richtung 32 und können sie in den Fächern 30 ablegen sowie auch wieder aus den Fächern entnehmen. Der Bordcomputer (nicht gezeigt) des Regalbedienungsgeräts 43 speichert das Fach 30, worin das Regalbedienungsgerät 43 eine Palette 44 abgelegt hat und auch die jeweilige elektronische Adresse der abgelegten Palette. Beim Abruf der Palette 44 holt sie das Regalbedienungsgerät 43 mit Hilfe seines elektronischen Gedächtnisses wieder aus dem Fach 30 ab, wo es die Palette 44 zuvor abgelegt hatte. Die Ablage von Paletten 44 in den einzelnen Fächern 30 eines Palettenspeichers 42 oder 29 ist völlig regellos, mit Ausnahme der Bedienung von Einrichtungen 49 der Reihen 50. Die Einrichtungen 49 der Reihen 50 sind allein der Übergabe von Paletten 44 an die Übergabeschlitten 31 und somit an die Bearbeitungsoperationen OP-10 bis OP-230 vorbehalten.

Im Sinne der Erfindung bilden die Fächer 30 der Reihen 39 und 40 die eigentlichen Speicherstellen der Palettenspeicher 16, 23, 24, 29 und 42. Die Anzahl der Fächer 30 der einzelnen Palettenspeicher 16, 23, 24, 29 und 42 ist so bemessen, dass darin Paletten 44 mit Kurbelwellen 45 in so ausreichender Zahl zwischengelagert, das heißt gespeichert werden können, bis innerhalb der Fertigungslinie 34 eine an den Operationen OP-10 bis OP-230 vorzunehmende Umrüstung erfolgt ist, ohne dass dabei die kontinuierliche Fertigung in der Richtung 11 unterbrochen werden muss. Während der Umrüstung von einer der Operationen OP-10 bis OP-220 wird der Inhalt der Fächer 30 geleert und an eine in der Förderrichtung 11 nachfolgende Operation OP-15 bis OP-230 abgegeben.

**Bezugszeichenliste**

| | |
|---|---|
| 1 bis 7 | Entkopplungsmodul |
| 42 | Palettenspeicher |
| 43 | Regalbedienungsgerät |
| 44 | Paletten |
| 45 | Kurbelwelle |
| 46 | Operation |
| 47 | Operation |
| 8 | statistische Prozess-Datenerfassung |
| 9 | Handmessplatz |
| OP-10 | Teilekennzeichnung |
| OP-15 | Wuchtzentrieren - Unwucht messen |
| 11 | Verlauf Fertigungslinie |
| OP-20 | Ablängen, Zentrieren, geometrisch ausrichten Alternativ: Wuchtzentrieren |
| OP-30 | Drehen |
| OP-40 | Vor-Fräsen Haupt- und Hublager |
| 12 | Fräsmaschine |
| 13 | Fräsmaschine |
| 14 | Drehmaschine |

| 15 | Drehmaschine |
|---|---|
| 16 | Palettenspeicher |
| 17 | Abstand |
| 18 | Übergabeband |
| 19 | Aufgabe, Eingang |
| 20 | Fräsmaschine |
| 21 | Fräsmaschine |
| 22 | Dreh-Drehräummaschine |
| OP-50 | Hauptlager Dreh-Drehräumen |
| OP-60 | Hublager Fertigfräsen |
| 23 | Palettenspeicher |
| 24 | Palettenspeicher |
| 25 | Ausgang |
| 26 | Führungsschiene |
| 27 | Führungsschiene |
| 28 | Abstand |
| 29 | Palettenspeicher |
| 30 | Fach |
| 31 | Übergabeschlitten - Portalroboter |
| 32 | Vertikal |
| 33 | AFO = Arbeitsfolgen |
| 34 | Fertigungslinie |
| 35 | äußere Längsseite |
| 36 | innere Längsseite |
| 37 | Horizontalführung |
| 38 | Vertikalführung |
| 39 | senkrechte Reihe |
| 40 | senkrechte Reihe |
| 41 | seitlicher Abstand |
| 42 | Palettenspeicher |
| 48 | Querrichtung |
| 49 | Bereitstellung |
| 50 | senkrechte Reihe |

**Patentansprüche**

1.  Flexible Fertigungslinie (34) zum Bearbeiten von auf Paletten (44) abgelegten Werkstücken (45), wobei

    - die Fertigungslinie (34) mehrere Entkopplungsmodule (1 bis 7) aufweist, **dadurch gekennzeichnet, dass**
    - jedes Entkopplungsmodul (1 bis 7) dazu vorgesehen ist, einzelne von in einer Mehrzahl auf adressierbaren Paletten (44) abgelegten Werkstücken (45) wenigstens einer von mehreren Bearbeitungsoperationen (OP-10 bis OP-230) zuzuführen,
    - einzelne Entkopplungsmodule (1 bis 7) sowohl in als auch entgegen der Richtung (11) der Fertigungslinie miteinander verbunden sind,
    - jedes Entkopplungsmodul (1 bis 7) einen Palettenspeicher (16, 23, 24, 29, 42) hat, der
    - mehrere vertikal etagenartig übereinander und horizontal in senkrechten Reihen (39, 40) nebeneinander angeordnete Fächer (30) zur Aufnahme einzelner Paletten (44) hat und seitlich neben einer senkrechten Reihe (39, 40)
    - eine senkrechte Reihe (50) aufweist mit
    - einer Einrichtung (49) zur Bereitstellung von Paletten (44) außerhalb der äußeren Längsseite (35) des Palettenspeichers (16, 23, 24, 29, 42), wobei das Entkopplungsmodul (1 bis 7) jeweils
    - ein Regalbedienungsgerät (43) hat, das entlang der inneren Längsseite (36) des Palettenspeichers (16, 23, 24, 29, 42) in horizontaler Richtung (11) an
    - Führungsschienen (26, 27) und zugleich in vertikaler Richtung (32) bewegbar und dazu vorgesehen ist, Paletten (44) zu jedem Fach (30) oder zur senkrechten Reihe (50) zu fördern, wobei
    - einzelne Palettenspeicher (16, 23, 24, 29, 42) im Verlauf (11) der Fertigungslinie (34)
    - einen Längsabstand (17) haben, über den sie durch ein Übergabeband (18) oder

- einen seitlichen Abstand (28) haben, über den sie durch ein Regalbedienungsgerät (43) miteinander in Verbindung stehen sowie am
- Eingang (19) der Fertigungslinie (34) eine Aufgabe für Paletten (44) mit zu bearbeitenden Werkstücken (45) und am
- Ausgang (25) eine Entnahme für Paletten (44) mit bearbeiteten Werkstücken (45) vorgesehen ist.

2. Fertigungslinie nach Anspruch 1, **dadurch gekennzeichnet, dass** das Regalbedienungsgerät (43)

- mit einer Steuerung versehen ist, nach deren Befehlen das Regalbedienungsgerät (43)
- an wenigstens einer horizontalen Führung (26, 27) längs des Palettenspeichers (16, 23, 24, 29, 42) in der Richtung (11) der Fertigungslinie (34) hin und her sowie
- in vertikaler Richtung (32) auf und ab verfahrbar ist und vor jedem Fach (30) des Palettenspeichers (16, 23, 24, 29, 42) entsprechend der jeweiligen Adresse einer Palette (44) positionierbar ist sowie
- eine Einrichtung aufweist, mittels derer eine Palette (44) aus einem Fach (30) entnehmbar oder in einem Fach (30) ablegbar ist.

3. Fertigungslinie nach Anspruch 2, **dadurch gekennzeichnet, dass** das Regalbedienungsgerät (43) dazu vorgesehen ist, einzelne Paletten (44) von einem Übergabeband (18) aufzunehmen oder auf einem Übergabeband (18) oder in einem Faäch (30) des Palettenspeichers (16, 23, 24, 29, 42) abzulegen sowie die Aufgabe- (19) oder Entnahmeeinrichtung (25) für Paletten (44) zu bedienen.

4. Fertigungslinie nach Anspruch 1, **dadurch gekennzeichnet, dass** senkrechte Reihen (50) des Palettenspeichers (16, 23, 24, 29, 42) eine Einrichtung von der Art eines Ein- / Ausschubtisches aufweisen, mittels derer eine Palette (44) aus der Reihe (50) außerhalb der zweiten Längsseite (35) des Palettenspeichers (16, 23, 24, 29, 42) in eine Bereitschaftsstellung (49) gebracht oder aus der Bereitschaftsstellung (49) wieder in die Reihe (50) hineingestellt werden kann.

5. Fertigungslinie nach Anspruch 1, **dadurch gekennzeichnet, dass** ein Übergabeschlitten (31) vorgesehen ist, welcher als Portalroboter ausgebildet ist, der entlang von horizontalen (37) und vertikalen Führungen (38) jeweils in zwei Richtungen (48) quer zur Richtung (11) der Fertigungslinie (34) verfahrbar ist.

6. Fertigungslinie nach Anspruch 5,
   **dadurch gekennzeichnet, dass** sich die horizontale Führung (37) des Übergabeschlittens (31) von der Bereitschaftsstellung (49) für eine Palette (44) am Palettenspeicher (16, 23, 24, 29, 42) bis hin zu jeder in der Querrichtung (48) aufeinanderfolgenden Bearbeitungsoperationen (OP-10 bis OP-230) erstreckt.

7. Fertigungslinie nach Anspruch 6, **dadurch gekennzeichnet, dass** sich die vertikale Führung (38) des Übergabeschlittens (31) von unten bis oben einer senkrechten Reihe (50) des Palettenspeichers (16, 23, 24, 29, 42) erstreckt.

8. Fertigungslinie nach einem der Ansprüche 6 und 7, **dadurch gekennzeichnet, dass** in Richtung (11) der Fertigungslinie (34) zwischen benachbarten Übergabeschlitten (31) eines Palettenspeichers (16, 23, 24, 29, 42) ein seitlicher Abstand (41) besteht.

9. Fertigungslinie nach Anspruch 1, **dadurch gekennzeichnet, dass** gegenüber dem Palettenspeicher (16, 23, 24, 29, 42) eines Entkopplungsmoduls (1 bis 7) in einem seitlichen Abstand (28) und parallel dazu ein weiterer Palettenspeicher (29) desselben oder eines anderen Entkopplungsmoduls (1 bis 7) angeordnet ist.

10. Fertigungslinie nach Anspruch 9, **dadurch gekennzeichnet, dass** zwischen zwei Palettenspeichern (16, 23, 24, 29, 42) jeweils ein Regalbedienungsgerät (43) angeordnet ist, mit welchem beide Palettenspeicher (16, 23, 24, 29 und 42) bedienbar sind.

11. Fertigungslinie nach Anspruch 9 oder 10,
    **dadurch gekennzeichnet, dass** in jedem Entkopplungsmodul (1 bis 7) ein zweites Regalbedienungsgerät (43) redundant vorhanden ist.

12. Fertigungslinie nach Anspruch 1,
    **dadurch gekennzeichnet, dass** zur Führung des Regalbedienungsgeräts (43) zwei Horizontalführungen (26, 27) vorgesehen sind, die sich in Richtung (11) der Fertigungslinie (34) parallel und in einem vertikalen Abstand voneinander entlang und auch parallel zu dem oder den Palettenspeicher(n) (16, 23, 24, 29, 42) eines bzw. zweier Entkopplungsmodule (1 bis 7) erstrecken.

13. Fertigungslinie nach Anspruch 12, **dadurch gekennzeichnet, dass** sich die obere (26) der beiden Horizontalführungen (26, 27) für ein Regalbedienungsgerät (43) in Richtung (11) der Fertigungslinie (34) von einem Entkopplungsmodul (1 bis 7) zum anderen erstreckt.

14. Fertigungslinie nach Anspruch 1, **dadurch gekennzeichnet, dass** die Größe eines Palettenspeichers (16, 23, 24, 29, 42) eines Entkopplungsmoduls (1 bis 6) so bemessen ist, dass er wenigstens eine Palette (44) aufnehmen kann, welche für eine dem jeweils nachfolgenden Entkopplungsmodul (2 bis 7) zugeordnete Operation (OP-10 bis OP-230) bestimmt ist.

15. Fertigungslinie nach Anspruch 14, **dadurch gekennzeichnet, dass** die Anzahl von in einem Palettenspeicher (16, 23, 24, 29, 42) gelagerten Paletten (44) bei vorgegebener Linientaktzeit von der Zeit bestimmt wird, die für die Umrüstung einzelner Operationen (OP-10 bis OP-230) auf ein Werkstück (45) einer anderen Serie erforderlich ist.

16. Fertigungslinie nach einem der Ansprüche 14 oder 15,
**dadurch gekennzeichnet, dass** jeder Palettenspeicher (16, 23, 24, 29, 42) gleichzeitig als Störspeicher funktioniert.

17. Fertigungslinie nach Anspruch 16, **dadurch gekennzeichnet, dass** an einen Palettenspeicher (16, 23, 24, 29, 42) eine Bearbeitungsoperation (OP-10 bis OP-230) in Form einer Fertigungszelle angebunden ist, welche Prozessdaten an einen Leitrechner bereitstellt.

18. Fertigungslinie nach Anspruch 1, **dadurch gekennzeichnet, dass** einzelne Bearbeitungsoperationen (OP-10 bis OP-230) mit mehreren, hintereinanderliegenden, gleichartigen Bearbeitungseinheiten (12 bis 15 und 20 bis 22) ausgestattet sind.

19. Fertigungslinie nach Anspruch 18, **dadurch gekennzeichnet, dass** einzelnen Bearbeitungsoperationen (OP-10 bis OP-230) der Entkopplungsmodule (1 bis 7) jeweils wenigstens eine Werkzeugmaschine (12 bis 15 und 20 bis 22) zugeordnet ist.

20. Fertigungslinie nach Anspruch 19, **dadurch gekennzeichnet, dass** einzelnen Bearbeitungsoperationen (OP-10 bis OP-230) Werkzeugmaschinen (12 bis 15 und 20 bis 22) wie z.B. Sägen, Drehmaschinen, Räummaschinen, Drehräummaschinen, Dreh-Drehräummaschinen, Fräsmaschinen, Außen- und Innenfräsmaschinen, Verzahnungs- oder Nutenfräsmaschinen, Kurbelwellen-Fest- und Richtwalzmaschinen oder Schleifmaschinen zugeordnet sind.

21. Fertigungslinie nach Anspruch 20, **dadurch gekennzeichnet, dass** einzelnen Bearbeitungsoperationen (OP-10 bis OP-230) gleichartige, sich ergänzende oder unterschiedliche Werkzeugmaschinen (12 bis 15 und 20 bis 22) vorgesehen sind.

22. Fertigungslinie nach Anspruch 21, **dadurch gekennzeichnet, dass** zugeordnet zu einem ersten Entkopplungsmodul (1, 2, 3, 4, 5, 6, 7) Werkzeugmaschinen (12 bis 15 und 20 bis 22) zum Drehen, Außenfräsen, Dreh-Drehräumen, Verzahnen oder Fräsen von Nuten und zugeordnet zu einem jeweils nachfolgenden zweiten Entkopplungsmodul (2, 3, 4, 5, 6, 7) Werkzeugmaschinen (12 bis 15 und 20 bis 22) zum Festwalzen und Richten, Härten, Schleifen oder Finishen an bzw. von Kurbelwellen (45) vorgesehen sind.

23. Fertigungslinie nach Anspruch 22, **dadurch gekennzeichnet, dass** einzelne Werkzeugmaschinen (12 bis 15 und 20 bis 22) in waagerechter Bauweise zur Beschickung und Aufnahme mit unterschiedlichen Werkstücken wie Kurbelwellen (45) Nockenwellen, Getriebewellen oder Schaltwellen sowie mit Spannmitteln und Werkzeugen ausgestattet sind.

**Claims**

1. A flexible production line (34) for the machining of workpieces (45) placed on pallets (44), wherein the production line (34) has a number of decoupling modules (1 to 7),
**characterised in that**

- each decoupling module (1 to 7) is provided for the purpose of conveying individual workpieces (45) from those placed in a plurality on addressable pallets (44) to at least one of a plurality of machining operations (OP-10 to OP-230),
- individual decoupling modules (1 to 7) are linked to each other, both in the direction (11) of the production line and also counter to it,
- each decoupling module (1 to 7) has a pallet store (16, 23, 24, 29, 42), which
- has a plurality of compartments (30) located vertically one above another in the form of floors, and horizontally next to each other in vertical arrays (39, 40) for the reception of individual pallets (44), and laterally, near a vertical array (39, 40),
- has a vertical array (50) with
- a device (49) for the preparation of pallets (44) outside the outer lengthwise side (35) of the pallet store (16, 23, 24, 29, 42), wherein in each case the decoupling module (1 to 7)
- has a storage and retrieval system (43), which can be moved along the internal lengthwise side (36) of the pallet store (16, 23, 24, 29, 42) in the horizontal direction (11) on
- guide rails (26, 27), and at the same time can be moved in the vertical direction (32), and is provided for the purpose of conveying pallets (44) to each compartment (30) or to the vertical array (50), where
- individual pallet stores (16, 23, 24, 29, 42) in the course (11) of the production line (34) have
- a lengthwise separation (17), across which they are linked together by means of a transfer belt (18) or
- a lateral separation (28), across which they are linked together by means of a storage and retrieval system (43) and also
- at the entry point (19) of the production line (34) a feeder is provided for pallets (44) with workpieces (45) that are to be machined, and
- at the exit point (25) a remover is provided for pallets (44) with workpieces (45) that have been machined.

2. Production line according to Claim 1,
**characterised in that** the storage and retrieval system (43)

- is provided with a controller, in accordance with the commands of which the storage and retrieval system (43)
- can be traversed backwards and forwards along the pallet store (16, 23, 24, 29, 42) in the direction (11) of the production line (34) on at least one horizontal guide (26, 27) and also
- can be traversed upwards and downwards in the vertical direction (32), and can be positioned in front of each compartment (30) of the pallet store (16, 23, 24, 29, 42) in accordance with the relevant address of a pallet (44), and also
- has a device by means of which a pallet (44) can be removed from a compartment (30) or placed in a compartment (30).

3. Production line according to Claim 2,
**characterised in that** the storage and retrieval system (43) is provided for the purpose of picking up individual pallets (44) from a transfer belt (18), or placing them on the transfer belt (18), or in a compartment (30) of the pallet store (16, 23, 24, 29, 42), as well as serving the feeder device (19) or remover device (25) for pallets (44).

4. Production line according to Claim 1,
**characterised in that** vertical arrays (50) of the pallet store (16, 23, 24, 29, 42) have a device in the form of a slide in/slide out table, by means of which a pallet (44) can be brought out of the array (50) outside the second lengthwise side (35) of the pallet store (16, 23, 24, 29, 42) into a ready position (49), or from the ready position (49) can once again be inserted into the array (50).

5. Production line according to Claim 1,
**characterised in that** a sliding transfer bed (31) is provided, which is configured as a portal robot, which can be traversed along horizontal (37) and vertical guides (38) respectively in two directions (48) at right angles to the direction (11) of the production line (34).

6. Production line according to Claim 5, **characterised in that** the horizontal guide (37) of the sliding transfer bed (31) extends from the ready position (49) for a pallet (44) on the pallet store (16, 23, 24, 29, 42) as far as to each of the machining operations (OP-10 to OP-230) following one after another in the crosswise direction (48).

7. Production line according to Claim 6,
**characterised in that** the vertical guide (38) of the sliding transfer bed (31) extends from below to above a vertical array (50) of the pallet store (16, 23, 24, 29, 42) .

8. Production line according to one of the Claims 6 and 7,
   **characterised in that** a lateral separation (41) exists in the direction (11) of the production line (34) between neighbouring transfer slides (31) of a pallet store (16, 23, 24, 29, 42).

9. Production line according to Claim 1,
   **characterised in that** opposite to the pallet store (16, 23, 24, 29, 42) of a decoupling module (1 to 7), with a lateral separation (28) and parallel to it, a further pallet store (29) of the same or another decoupling module (1 to 7) is located.

10. Production line according to Claim 9, **characterised in that** between two pallet stores (16, 23, 24, 29, 42) a storage and retrieval system (43) is located in each case, by means of which both pallet stores (16, 23, 24, 29, 42) can be served.

11. Production line according to Claim 9 or 10, **characterised in that** in each decoupling module (1 to 7) a second storage and retrieval system (42) is redundantly present.

12. Production line according to Claim 1,
    **characterised in that** for guidance of the storage and retrieval system (43) two horizontal guides (26, 27) are provided, which extend in the direction (11) of the production line (34) parallel to and with a vertical separation from one another along, and also parallel to, the one or more pallet stores (16, 23, 24, 29, 42) of one or two decoupling modules (1 to 7) respectively.

13. Production line according to Claim 12,
    **characterised in that** the upper (26) of the two horizontal guides (26, 27) for a storage and retrieval system (43) extends from one decoupling module (1 to 7) to another in the direction (11) of the production line (34).

14. Production line according to Claim 1,
    **characterised in that** the size of a pallet store (16, 23, 24, 29, 42) of a decoupling module (1 to 6) is dimensioned such that it can receive at least one pallet (44) which is determined for an operation (OP-10 to OP-230) assigned to the respective following decoupling module (2 to 7).

15. Production line according to Claim 14,
    **characterised in that** the number of pallets (44) stored in a pallet store (16, 23, 24, 29, 42) for a prescribed line cycle time is determined by the time that is required for the retooling of individual operations (OP-10 to OP-230) on a workpiece (45) of another production series.

16. Production line according to one of the Claims 14 or 15,
    **characterised in that** each pallet store (16, 23, 24, 29, 42) functions at the same time as a store in the event of malfunctions.

17. Production line according to Claim 16,
    **characterised in that** a machining operation (OP-10 to OP-230) is linked to a pallet store (16, 23, 24, 29, 42) in the form of a production cell, which prepares process data on a master computer.

18. Production line according to Claim 1,
    **characterised in that** individual machining operations (OP-10 to OP-230) are fitted out with a number of machining units (12 to 15 and 20 to 22) of the same type lying one behind another.

19. Production line according to Claim 18,
    **characterised in that** in each case at least one machine tool (12 to 15 and 20 to 22) is assigned to individual machining operations (OP-10 to OP-230) of the decoupling modules (1 to 7).

20. Production line according to Claim 19,
    **characterised in that** machine tools (12 to 15 and 20 to 22) such as e.g. saws, lathes, broaching machines, turn-broaching machines, turn-turn-broaching machines, milling machines, external and internal milling machines, gear cutting or keyway milling machines, crankshaft machines, solid rolling machines and roll straightening machines or grinding machines are assigned to individual machining operations (OP-10 to OP-230).

**21.** Production line according to Claim 20,
**characterised in that** machine tools (12 to 15 and 20 to 22) that are of the same type, complementary, or of different type are provided for individual machining operations (OP-10 to OP-230) .

**22.** Production line according to Claim 21,
**characterised in that** machine tools (12 to 15 and 20 to 22) for turning, external milling, turn-turnbroaching, gear cutting or milling of keyways are provided that are assigned to a first decoupling module (1, 2, 3, 4, 5, 6, 7), and machine tools(12 to 15 and 20 to 22) for solid rolling and roll straightening, hardening, grinding or finishing on crankshafts (45) are provided that are assigned to a respective following second decoupling module (2, 3, 4, 5, 6, 7).

**23.** Production line according to Claim 22,
**characterised in that** individual machine tools (12 to 15 and 20 to 22) in a horizontal form of design are fitted for the loading and reception of different workpieces such as crankshafts (45), camshafts, gearbox shafts or selector shafts, as well as with clamping devices and tools.

**Revendications**

**1.** Ligne de fabrication souple (34) pour usiner des pièces (45) déposées sur des palettes (44) et qui comporte plusieurs modules de désaccouplement (1 à 7), **caractérisée en ce que**

- chaque module de désaccouplement (1 à 7) est prévu pour amener des pièces (45) individuelles provenant d'une pluralité de pièces déposées sur des palettes (44) adressables, à au moins une des opérations d'usinage (OP-10 à OP-230),
- les modules individuels de désaccouplement (1 à 7) sont reliés entre eux à la fois dans le sens de la ligne de fabrication (11) et dans le sens opposé,
- chaque module de désaccouplement (1 à 7) possède un stockage de palettes (16, 23, 24, 29, 42) qui
- présente, pour accueillir les palettes individuelles (44), des compartiments (30) superposés verticalement en étages et disposés horizontalement côte à côte dans des lignes verticales (39, 40)
- à côté d'une ligne verticale (39, 40) se trouve une autre une ligne verticale (50) avec
- un dispositif (49) pour mettre à disposition des palettes (44) à l'extérieur du côté longitudinal externe (35) du stockage de palettes (16, 23, 24, 29, 42),
- chaque module de désaccouplement (1 à 7) possède un appareil de mise en rayonnage (43) pouvant se déplacer le long du côté longitudinal interne (36) du stockage de palettes (16, 23, 24, 29, 42) en direction horizontale (11) sur des rails de guidage (26, 27) et en même temps en direction verticale (32), et pour cela il est prévu de déplacer les palettes (44) en direction de chaque compartiment (30) ou de la ligne verticale (50), de sorte que
- les stockages individuels de palettes (16, 23, 24, 29, 42) se trouvent sur le trajet (11) de la ligne de fabrication (34) et
- ils présentent un espacement longitudinal (17) au-dessus duquel ils sont reliés entre eux par une bande de transfert (18) ainsi qu'un espacement latéral (28) au-dessus duquel ils sont reliés par un appareil de mise en rayonnage (43),
- à l'entrée (19) de la ligne de fabrication (34) se trouve une amenée pour les palettes (44) portant les pièces à usiner (45),
- à la sortie (25) de la ligne de fabrication, est prévu un enlèvement pour les palettes (44) portant les pièces usinées (45).

**2.** Ligne de fabrication selon la revendication 1, **caractérisée en ce que** l'appareil de mise en rayonnage (43) comprend

- une commande dont les ordres font déplacer cet appareil (43) sur au moins un guidage horizontal (26, 27) le long du stockage de palettes (16, 23, 24, 29, 42), en va-et-vient selon la direction (11) de la ligne de fabrication (34), ainsi qu'en va-et-vient en direction verticale (32) en pouvant être positionné devant chaque compartiment (30) du stockage de palettes (16, 23, 24, 29, 42) en correspondance avec l'adresse d'une palette (44)
- un dispositif par l'intermédiaire duquel une palette (14) peut être retirée d'un compartiment (30) ou déposée dans celui-ci.

**3.** Ligne de fabrication selon la revendication 2, **caractérisée en ce que** l'appareil de mise en rayonnage (43) est prévu pour accueillir des palettes individuelles (44) amenées par une bande de transfert (18) et pour les déposer sur une bande de transfert (18) ou dans un compartiment (30) du stockage de palettes (16, 23, 24, 29, 42) ainsi que pour desservir le dispositif de dépôt (19) et d'enlèvement (25) des palettes (44).

4. Ligne de fabrication selon la revendication 1, **caractérisée en ce que** des lignes verticales (50) du stockage de palettes (16, 23, 24, 29, 42) présentent un dispositif du genre tablé d'amenée et de sortie par coulissement, par l'intermédiaire de laquelle une palette (44), provenant de la ligne (50) à l'extérieur du second côté longitudinal (35) du stockage de palettes (16, 23, 24, 29, 42) peut être amenée en position de disponibilité (49) ou, à partir de cette position, peut être réintroduite dans la ligne (50).

5. Ligne de fabrication selon la revendication 1, **caractérisée en ce qu'**il est prévu un chariot de transfert (31) ayant la forme d'un robot du type à portique qui peut se déplacer le long de guidages horizontaux (37) et verticaux (38) perpendiculairement à la ligne de fabrication (34), dans les deux sens (48).

6. Ligne de fabrication selon la revendication 5, **caractérisée en ce que** le guidage horizontal (37) du chariot de transfert (31) s'étend de la position d'attente (49) pour une palette (44) située sur le stockage de palettes (16, 23, 24, 29, 42) jusqu'à chacune des opérations d'usinage OP-10 à OP-230 qui se suivent selon la direction transversale (48).

7. Ligne de fabrication selon la revendication 6, **caractérisée en ce que** le guidage vertical (38) du chariot de transfert (31) s'étend du haut en bas d'une ligne verticale (50) du stockage de palettes (16, 23, 24, 29, 42).

8. Ligne de fabrication selon la revendication 6 ou 7, **caractérisée en ce que** selon la direction (11) de la ligne de fabrication (34), il existe un espacement latéral (41) entre des chariots de transfert voisins (31) d'un stockage de palettes (16, 23, 24, 29, 42).

9. Ligne de fabrication selon la revendication 1, **caractérisée en ce que** par rapport au stockage de palettes (16, 23, 24, 29, 42) d'un module de désaccouplement (1 à 7), un autre stockage de palettes (29) appartenant au même ou à un autre module de désaccouplement (1 à 7) est disposé à une certaine distance (28) et parallèlement à celui-ci.

10. Ligne de fabrication selon la revendication 9, **caractérisée en ce qu'**entre deux stockages de palettes (16, 23, 24, 29, 42) est disposé chaque fois un appareil de mise en rayonnage (43), qui peut desservir les deux stockages de palettes (16, 23, 24, 29, 42).

11. Ligne de fabrication selon la revendication 9 ou 10, **caractérisée en ce que** dans chaque module de désaccouplement (1 à 7) existe un second appareil de mise en rayonnage (43) redondant.

12. Ligne de fabrication selon la revendication 1, **caractérisée en ce que** pour guider l'appareil de mise en rayonnage (43), il est prévu deux guidages horizontaux (26, 27) disposés selon la direction (11) de la ligne de fabrication (34), en étant parallèles entre eux avec espacement vertical, et également parallèles au(x) stockage(s) de palettes (16, 23, 24, 29, 42) d'un ou de deux modules de désaccouplement (1 à 7).

13. Ligne de fabrication selon la revendication 12, **caractérisée en ce que** celui (26), situé le plus haut, des deux guidages horizontaux (26, 27) pour un appareil de mise en rayonnage (43), s'étend d'un module de désaccouplement (1 à 7) à l'autre, selon la direction (11) de la ligne de fabrication (34).

14. Ligne de fabrication selon la revendication 1, **caractérisée en ce qu'**un stockage de palettes (16, 23, 24, 29, 42) d'un module de désaccouplement (1 à 6) a une grandeur telle qu'il peut accueillir au moins une palette (44) qui est définie pour une opération (OP-10 à OP-230) associée au module de désaccouplement suivant (2 à 7).

15. Ligne de fabrication selon la revendication 14, **caractérisée en ce que** le nombre des palettes (44) déposées dans un stockage de palettes (16, 23, 24, 29, 42), est, dans le cas d'une ligne cadencée, défini par le temps nécessaire à la conversion des opérations individuelles (OP-10 à OP-230) pour passer à une pièce (45) d'une autre série.

16. Ligne de fabrication selon la revendication 14 ou 15, **caractérisée en ce que** chaque stockage de palettes (16, 23, 24, 29, 42) fonctionne en même temps comme stockage en cas d'incident.

17. Ligne de fabrication selon la revendication 16, **caractérisée en ce qu'**à un stockage de palettes (16, 23, 24, 29, 42) est affectée une opération d'usinage (OP-10 à OP-230) sous la forme d'une cellule de fabrication qui met à disposition des données de process sur un ordinateur de conduite.

**18.** Ligne de fabrication selon la revendication 1, **caractérisée en ce que** des opérations d'usinage individuelles (OP-10 à OP-230) sont équipées de plusieurs unités d'usinage (12 à 15 et 20 à 22) du même genre montées en série.

**19.** Ligne de fabrication selon la revendication 18, **caractérisée en ce qu'**aux opérations individuelles d'usinage (OP-10 à OP-230) des modules de désaccouplement (1 à 7) est associée chaque fois au moins une machine-outil (12 à 15 et 20 à 22).

**20.** Ligne de fabrication selon la revendication 10, **caractérisée en ce qu'**aux opérations individuelles d'usinage (OP-10 à OP-230), sont associées des machines-outils (12 à 15 et 20 à 22) telles que par exemple des scies, des tours, des brocheuses, des brocheuses rotatives, des tours de brochage, des fraiseuses, des fraiseuses interne et externe, des fraiseuses de dentures ou de rainures, des machines de roulage et de dressage de vilebrequins ou des rectifieuses.

**21.** Ligne de fabrication selon la revendication 20, **caractérisée en ce qu'**aux opérations individuelles d'usinage (OP-10 à OP-230) il est prévu des machines-outils (12 à 15 et 20 à 22) du même genre se complétant, ou des machines différentes.

**22.** Ligne de fabrication selon la revendication 21, **caractérisée en ce qu'**il est prévu, associées à un premier module de désaccouplement (1, 2, 3, 4, 5, 6 7) des machines-outils (12 à 15 et 20 à 22) pour tourner, fraiser extérieurement, brocher, réaliser des dentures ou fraiser des rainures et, associées à un second module de désaccouplement (2, 3, 4, 5, 6, 7) faisant suite au premier, des machines-outils (12 à 15 et 20 à 22) pour rouler et dresser, durcir, rectifier ou finir des arbres de vilebrequin (45).

**23.** Ligne de fabrication selon la revendication 22, **caractérisée en ce que** des machines-outils individuelles (12 à 15 et 20 à 22) sont réalisées avec configuration horizontale pour recevoir des pièces différentes, telles que des vilebrequins (45), des arbres à cames, des arbres de transmission ou des arbres de commutation, ainsi que des moyens de serrage et des outils.

FIG.1

FIG.2

FIG.3

EP 1 560 678 B1

Fig.4